# EUROPEAN PATENT APPLICATION

(11) **EP 3 628 899 A1**
(43) Date of publication of application: **01.04.2020**
(21) Application number: 19199859.0
(22) Date of filing: 26.09.2019
(51) Int. Cl.: F16K 5/06

(54) **VALVE**

(30) Priority: 26.09.2018 DE 202018105534 U
(71) Applicant: Johnson Electric International AG, 3280 Murten (CH)
(72) Inventor: Urban, Christian, Hong Kong (HK); Endt, Joerg, Hong Kong (HK); Ettrich, Torsten, Shatin, N.T. (HK)
(74) Representative: Hocking, Adrian Niall

(57) **Abstract**

The invention relates to a valve (1) for interruption of a fluid flow along a fluid flow path passing through the valve (1), the valve includes an inlet adapter (10), a valve body (7) connected to the inlet adapter (10), a seal (5) arranged between the inlet adapter (10) and the valve body (7) with a seal opening (6) through the seal for the fluid flowing when the valve (1) is open, a motor control gear unit (7a), and a sealing body (2) with a ball segment-shaped sealing surface element (3) and bearing element (4) arranged on the side of the sealing surface element (3). The sealing body (2) is mounted within the valve body (7) so as to be rotatable around an axis running substantially perpendicular to the fluid flow path and through the bearing element (4).

## Description

### FIELD OF THE INVENTION

The invention relates to a valve for the interruption of a fluid flow along a fluid flow path passing through the valve

### BACKGROUND OF THE INVENTION

Valves are components which are used for shutting off or controlling the flow of liquids or gases, in the process of which a sealing body is moved within the valve. The flow is reduced or interrupted by the entire sealing body being pressed onto a suitably shaped opening.

In particular, valves are also used in gas meters to interrupt the gas flow. To achieve complete interruption, suitable sealing systems with sealing bodies are used. In order to regulate or interrupt the gas flow in gas meters, rotary valves in particular are suitable. Here a sealing body is arrested in a closed and an open valve position, so that the gas flow is interrupted or allowed through.

In the prior art, sealing bodies with a spherical or cone-shaped form, made from metal or plastic with a passage for a specified volume flow, are already known. In addition, sealing bodies with a spherical form exist which consist of a metal core with a plastic over-mould. The functional principle with this type of valve is a rotary movement of the sealing body by 90°, so that the volume flow is either stopped or allowed through.

Owing to the large number of individual components, the assembly of a sealing system from the prior art is, furthermore, complex and/or costly and the risk of leakage is increased.

### SUMMARY OF THE INVENTION

Accordingly, there is a desire for a valve which enables the reliable blocking of a fluid flow and avoids uneven stresses - both for the open and the closed valve position - for the seal owing to the pressure of the sealing body; here, particular importance is also attached to cost-effective production. The task also particularly concerns the suitability of the individual components, particularly the sealing body, for automated assembly.

The valve for interruption of a fluid flow along a fluid flow path passing through the valve, the valve includes an inlet adapter, a valve body connected to the inlet adapter, a seal arranged between the inlet adapter and the valve body with a seal opening through the seal for the fluid flowing when the valve is open, a motor control gear unit, and a sealing body with a ball segment-shaped sealing surface element and bearing element arranged on the side of the sealing surface element. The sealing body is mounted within the valve body so as to be rotatable around an axis running substantially perpendicular to the fluid flow path and through the bearing element. The seal includes an outer section for static sealing between the components in the valve and an inner section for dynamic sealing relative to the sealing body, and the seal is prestressed in such a way that the inner section of the seal exerts a pressure on the sealing body in the closed valve position.

Preferably, the prestressing of the seal is achieved through at least two spring elements which are arranged within the inlet adapter.

Preferably, the valve includes several spring-guiding elements in the form of spring holder pockets, in which the spring elements are arranged.

Preferably, a single spring element presses the seal onto the sealing body when the valve is closed.

Preferably, the spring element is arranged around a spring-guiding element positioned within the inlet adapter.

Preferably, the a spring effect is produced by a shape of the seal and/or an arrangement of the seal within the valve.

Preferably, gripping ribs are arranged in a central area of the sealing surface element to make it easier to grip the sealing body.

Preferably, a central area of the sealing surface element is flat.

Preferably, the motor control gear unit includes a drive wheel, the bearing elements include openings for a connection to the drive wheel.

Preferably, the sealing surface element has a ring-shaped sealing surface seal section which is designed capable of being applied to a ring-shaped seal.

Preferably, there is a distance between the sealing surface element and the seal when positioning of the sealing body in the open valve position.

Preferably, the sealing body encloses an angle which is greater than 90° between the open and the closed valve position of the sealing body.

Preferably, the seal opening is designed circular or oval.

Preferably, the seal is designed as a sealing lip.

Preferably, the valve body and a housing of the motor control gear unit are designed as one piece.

Preferably, a sealing surface is arranged on the sealing surface element in a direction corresponding to the seal.

Preferably, a thickness of the sealing surface element is constant.

Preferably, a number of the bearing element is two and the sealing body is substantially constructed symmetrically in relation to a plane arranged centrally between the two bearing elements.

Preferably, a surface area of the surface of the sealing surface element is larger than the surface of the seal opening and smaller than twice the surface area of the seal opening.

Below, embodiments of the present disclosure will be described in detail with reference to the accompanying drawings.

### BRIEF DESCRIPTION OF THE DRAWINGS

Fig. 1 is an exploded perspective view of a valve with two spring elements according to one embodiment of the present invention;
Fig. 2 is an exploded perspective view of a valve with one spring element according to one embodiment of the present invention;
Fig. 3A and 3B are sectional views of the valve of Fig. 1 in the closed position;
Fig. 4A and 4B are sectional views of the valve of Fig. 2 in the closed position;
Fig. 5A and 5B are sectional views of the valve of Fig. 1 in the open position;
Fig. 6A and 6B are sectional views of the valve of Fig. 2 in the open position;
Fig. 7A and 7B are sectional views of a valve without individual spring elements;
Fig. 8A - 8C are different perspective views of a sealing body in detail of a valve; and
Fig. 9 is a perspective view of a valve according to another embodiment of the present invention.

The following implementations are used for the description of the present disclosure in conjunction with above figures.

### DETAILED DESCRIPTION OF THE PREFERRED EMBODIMENTS

The technical solutions of the embodiments of the present invention will be clearly and completely described as follows with reference to the accompanying drawings. Apparently, the embodiments as described below are merely part of, rather than all, embodiments of the present invention. Based on the embodiments of the present invention, any other embodiment obtained by a person skilled in the art without paying any creative effort shall fall within the protection scope of the present invention.

It is noted that, when a component is described to be "fixed" to another component, it can be directly fixed to the another component or there may be an intermediate component. When a component is described to be "connected" to another component, it can be directly connected to the another component or there may be an intermediate component. When a component is described to be "disposed" on another component, it can be directly disposed on the another component or there may be an intermediate component.

Unless otherwise specified, all technical and scientific terms have the ordinary meaning as commonly understood by people skilled in the art. The terms used in this disclosure are illustrative rather than limiting. The term "and/or" used in this disclosure means that each and every combination of one or more associated items listed are included.

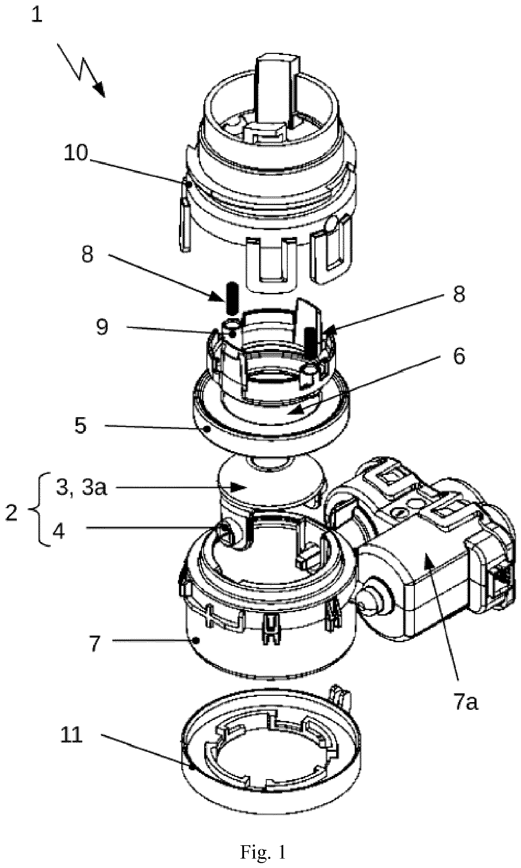

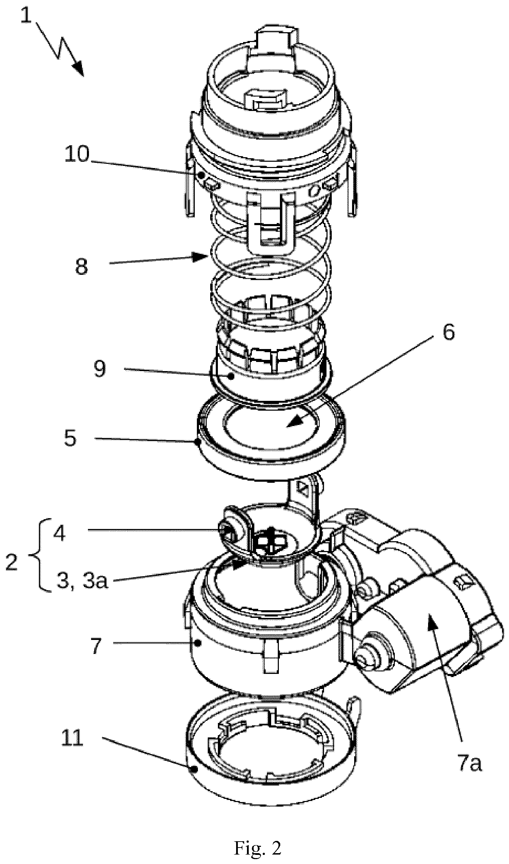

Fig. 1 and Fig. 2 show exploded drawings of a valve 1 in two different embodiments. Through a sealing system the valve 1 is sealed off and depending on the setting of the valve 1 the flow of a fluid, for example, gas or liquid or other fluid, through the valve 1 is enabled or the flow of the fluid is prevented by a mechanical barrier, the sealing body 2.

The sealing body 2 essentially includes a sealing surface element 3 with a sealing surface 3a and bearing elements 4 arranged at the side(s). The sealing surface 3a of the sealing surface element 3 is designed in such a way that a circular seal opening 6 in a ring-shaped seal 5 can be sealed off through the placing of the sealing surface 3a of the sealing surface element 3 onto the seal 5. Here the sealing surface 3a is the surface of the sealing surface element 3, which points in the direction of the seal 5 in the case of a closed valve position and abuts the seal 5 and the seal opening 6. The seal opening 6 in the seal 5 is hence capable of being completely closed by the sealing surface element 3 of the sealing body 2, as a result of which the flow of a fluid through this seal opening 6 can be prevented. The flow path of the fluid runs axial to the seal 5 through the seal opening 6.

In at least one embodiments, the sealing body 2 is, by means of the bearing elements 4, mounted so as to be rotatable around an axis which runs through the bearing elements 4 arranged at the side(s). As a result the sealing surface element 3 can be pivoted away from the seal opening 6. The sealing body 2 is arranged within a valve body 7 in which the sealing body 2 is fixed via the bearing elements 4. A motor control gear unit 7a is arranged connected to the valve body 7. The motor control gear unit 7a and the valve body 7 are advantageously designed as one piece. As a result, no seal between the housing components of the valve body 7 and the motor control gear unit 7a is required.

In order to achieve a good seal between the seal 5 and the sealing body 2, spring elements 8 are arranged on the side of the seal 5 which faces away from the valve body 7, which are guided through spring-guiding elements 9 and thereby held in position. In the embodiment shown in Fig. 1, two spring elements 7 are arranged opposite each other in two cylindrical spring-guiding elements 8. The two spring-guiding elements 8 are arranged on two opposing sides of the fluid flow path.

As an alternative design of the valve 1, in Fig. 2 only one spring element 8 and one spring-guiding element 9 are arranged in each case. The spring element 8 exerts a force on the seal 5 and thereby increases the pressure between the seal 5 and the sealing body 2. Here the counterpart, which makes it possible for the spring element 8 to exert a force on the seal 5, is an inlet adapter 10, which is capable of being connected by means of fixing elements via a snap connection to the valve body 7. Once assembly has taken place, the spring element 8 is limited spatially by the spring-guiding element 9. Thus an opposing force to the force is generated which by means of the spring element 8 acts on the spring-guiding element 9. Arranged on the side of the valve body 7 which faces away from the seal 5 is a second adapter element, the outlet adapter 11, which is likewise designed capable of being connected to the valve body 7.

The sealing system is designed in particular for simple and rapid assembly in an axial direction of the seal 5. The sealing body 2 engages via a snap connection with valve body 7. The sealing body 2 is designed symmetrical. Consequently, assembly in the correct position is not necessary. The sealing body 2 is designed in such a way that the bearings become deformed inwards during assembly. Thus sufficient undercut can be overcome in order to securely fix the sealing body 2 in the assembled state. Furthermore, the sealing body 2 in this embodiment has, in the interior of the ball segment-shaped sealing element 3, a cross or a cross-shaped raised section. This cross provides a simple gripper used for automated assembly with self-centring component pick-up and secure assembly.

For the assembly of seal 5 the seal 5 is placed on the valve body 7 and pre-centred on the basis of the stipulated geometry of the components. During the assembly of spring element 8, the spring element 8 is inserted into the inlet adapter 10 and the spring-guiding element 9 together with the spring element 8, is engaged with the inlet adapter 10 via a snap connection. Thereafter the individual inlet adapter 10 with the assembled spring system, which consists of spring element 8, spring-guiding element 9 and the inlet adapter 10, is engaged on valve body 7 via a snap connection. Here the fine centring of the seal 5 also takes place. The seal 5 is then fixed - providing a static back-to-back seal - between the valve body 7 and the inlet adapter 10.

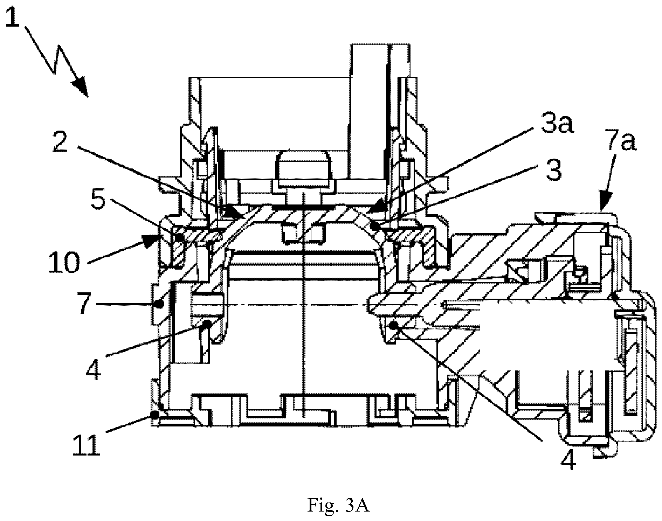

Figures 3A, 3B, 4A, 4B, 5A, 5B, 6A and 6B show different cross-sectional views of sealing systems for valves 1 which correspond to the two embodiments from Figures 1 and 2. Figures 1, 3A, 3B, 5A and 5B show a design variant with two spring elements and Figures 2, 4A, 4B, 6A and 6B show a design variant with a single, central spring element.

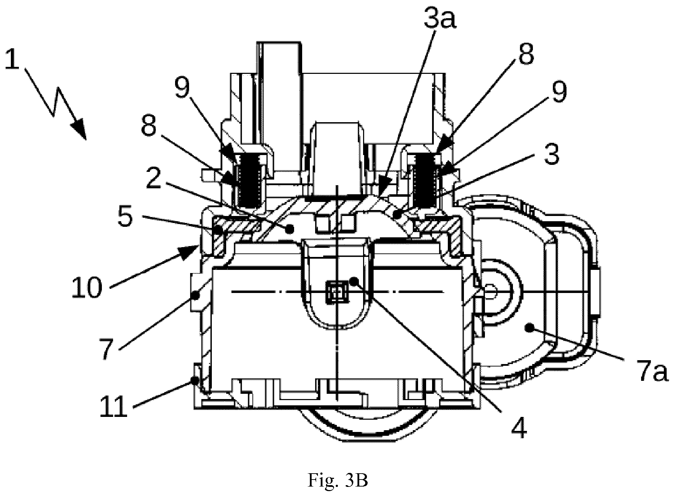

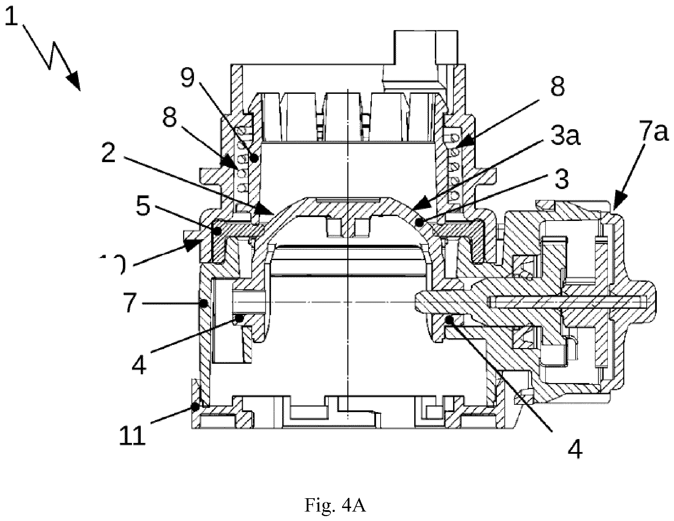

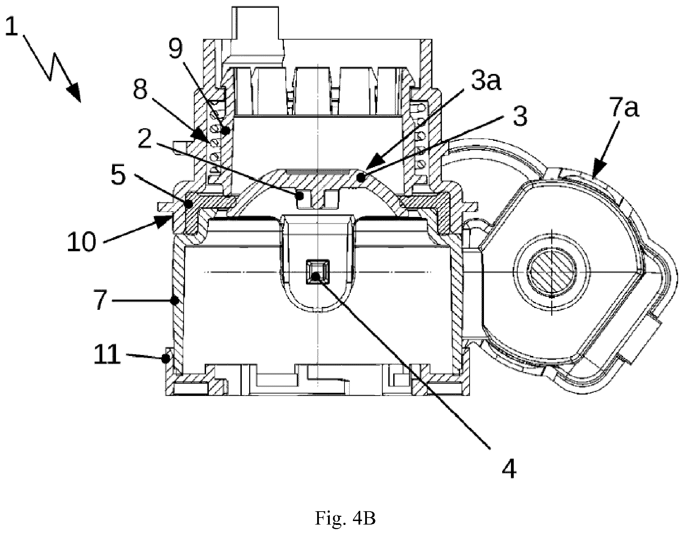

Figures 3A, 3B, 4A and 4B show sealing systems in a closed valve position. The illustrations show a cross section through the sealing system. Figures 3B and 4B are shown rotated by 90° compared with Figures 3A and 4A. Here the sealing body 2 prevents the flow of fluids through the valve 1, with the seal 5 providing a gas-tight seal between the inlet adapter 10 and the valve body 7. The sealing surface element 3 of the sealing body 2 abuts the seal 5 with the sealing surface 3a and completely blocks the flow path of the fluid.

The sealing body 2 has bearing elements 4 arranged at the side(s) by means of which the sealing body 2 is mounted so as to be rotatable within the valve body 7. The bearing elements 4 arranged at the side(s) have bearing pins on which the sealing body 2 is mounted in the valve body 7. In addition, the sealing body 2 has openings in the area of the laterally arranged bearing elements 4 through which a drive shaft can reach.

The inlet adapter 10 is connected to the valve body 7. In order to ensure a seal between the sealing surface element 3 and the seal 5, a spring force is used. In the first design variant, as illustrated in Figures 3A and 3B, this is achieved by two spring elements 8, which are arranged in two spring-guiding elements 9. The spring-guiding elements 9 are designed as spring holder pockets 9 into which the spring elements 8 can be introduced. Advantageously the inlet adapter 10 is designed in such a way that a section projecting from the limiting wall of the inlet adapter 10 overlaps the spring holder pocket 9 and hence covers an opening of the spring holder pocket 9. As a result, the spring element 8 arranged in the spring holder pocket 9 is protected from dirt. In accordance with the second design variant in Figures 4A and 4B, a single spring element 8 is arranged centrally around a spring element 9. The force effect of the spring element 8 on the seal 5 strengthens the seal between the seal 5 and the sealing body 2. Through the limit stop on the inlet adapter 10, the spring effect on the seal 5 is limited in its movement.

The seal 5 is also shaped in such a way that, additionally, also the housing components above and below the seal 5 are sealed against each other and that also static, back-to-back sealing takes place between the inlet adapter 10 and the valve body 7. Here it is possible to have an axial seal, as in this embodiment, or execution as a radial seal, or as a combination of a radial and axial seal. At the bottom end of the valve body 7, the outlet adapter 11 terminates the sealing system 1 in a downward direction. The outlet adapter 11 can be connected to the valve body 7 in a customer-specific manner; here a mechanical and gas-tight connection, for example by means of laser welding, is suitable.

When the valve is closed the medium, i.e. the gas or liquid or other fluid, flows from "above" through the customer-specific inlet adapter 10, then through the spring-guiding element 9 and is prevented from flowing further because of the seal 5 and the sealing body 2. The valve 1 is closed.

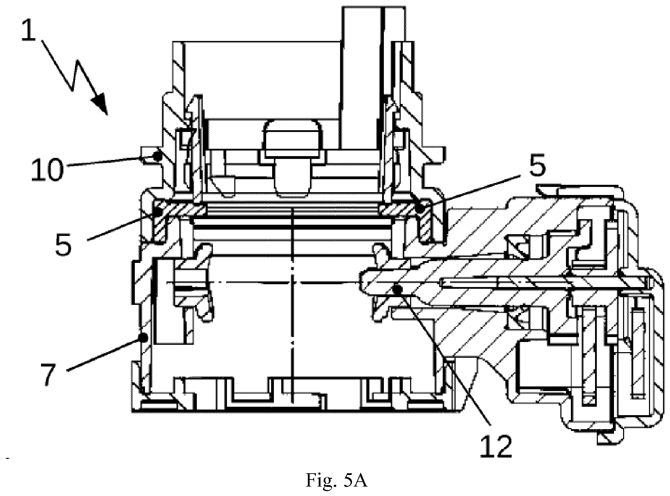

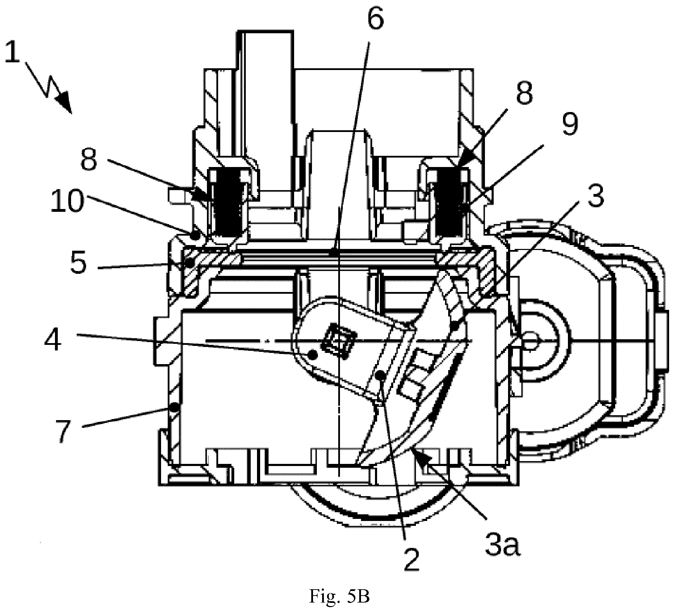

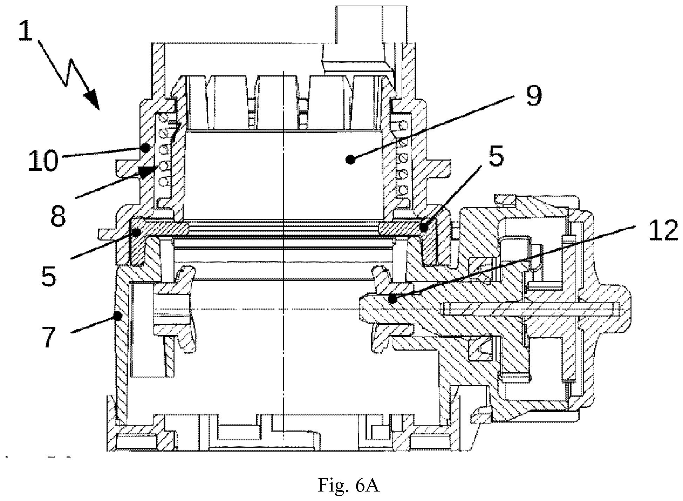

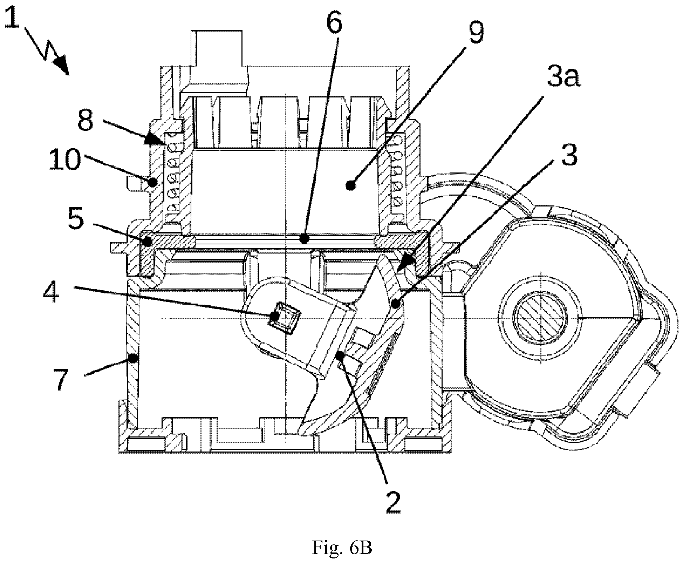

Fig. 5A, 5B, 6A and 6B show an open valve 1. It is therefore possible for the medium to flow through and pass through the valve 1 along the flow path. The illustrations in Figures 5B and 6B are arranged rotated by 90° in the open valve position compared with the illustrations in Figures 5A and 6A. The sealing body 2 is now arranged rotated by more than 90°compared with its position in Figures 3A, 3B, 4A and 4B. The sealing body 2 has been rotated or pivoted around an axis which runs through the bearing elements 4. The sealing surface element 3 with the sealing surface 3a of the sealing body 2 has, in this position, no contact with the seal 5 and the fluid can flow through the seal opening 6 in the seal 5. The valve 1 is completely open. A pivoting of the sealing surface element 3 by an angle of more than 90° is needed with the design in this embodiment in order to ensure a distance between the outer surface of the sealing surface element 3 and the seal 5. Particularly advantageous is a rotation by an angle of 115°, as a result of which the sealing surface element 3 leaves the seal 5 securely. With an alternative embodiment with somewhat more installation space, this can also be guaranteed with an angle of just 90°. In addition, an angle of less than 115° between the positions of the sealing body 2 between the open and the closed valve position can be achieved by the seal opening 6 being reduced in size in relation to the size of the sealing body 2. This also enables an advantageous reduction in the size of the sealing surface 3a and hence also of the sealing surface element 3.

In accordance with the first design variant, which is shown in Figures 5A and 5B, two spring elements 8 are arranged in two spring-guiding elements 9. With the second design variant in Figures 6A and 6B, the central spring element 8 is arranged around the spring-guiding element 9. The spring-guiding element 9 was engaged with the customer-specific inlet adapter 10 via a snap connection. Through the spring-guiding element 9, the shapeability of the spring element 8 is fixed in such a way that the spring element 8 can only be moved along the axis of the spring element 8. As a result, the direction of the force which the spring element 8 exerts on the seal 5 is also restricted to the axial direction. The spring-guiding element 9 is axially deflected due to the spring force of the spring element 8. The spring element 8 is axially deflected and acts uniformly on the seal 5. Consequently the seal 5 is stressed in an advantageous manner in terms of rotational symmetry. The seating for the seal 5 on the valve body 7 limits the deflection of the seal. As a result the insertion of the sealing body 2 into the seal 5 during the closing process is favoured. The seal 5 additionally provides a static, back-to-back seal between the inlet adapter 10 and the valve body 7. This may be in the form of an axial seal, as shown here, a radial seal or as a combined axial and radial seal.

The valve 1 is opened and closed by means of a rotary movement of the sealing body 2. The sealing body 2 is pivoted by means of a drive wheel 12, which is connected to the motor control gear unit 7a, from an open valve position in which the fluid can flow through the seal opening 6, into a closed valve position. In the closed valve position the sealing surface element 3 abuts the seal 5 with the sealing surface 3a and blocks the seal opening 6 as shown in Figures 3A, 3B, 4A, and 4B.

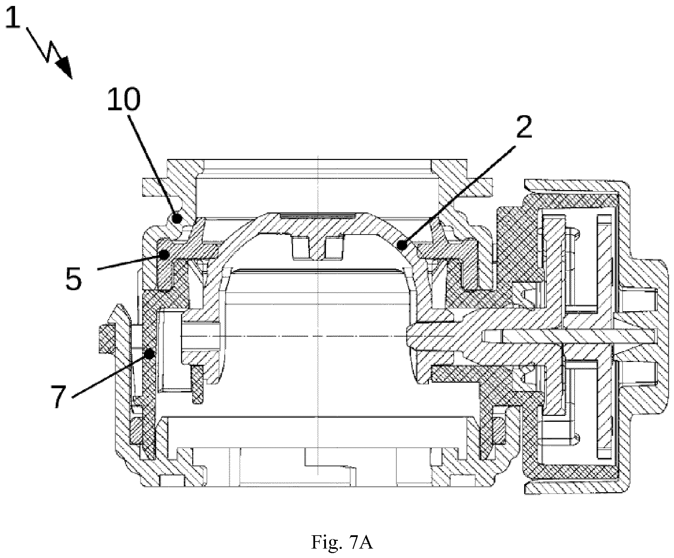

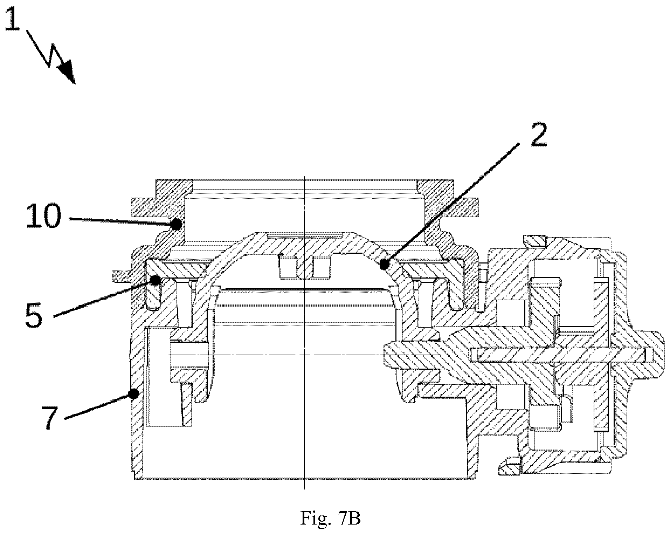

Figures 7A and 7B show embodiments which do not have a separate spring element. The necessary spring force for supporting the sealing of the seal opening 6 and for gas-tight sealing between the inlet adapter 10 and the valve body 7 is provided here by the seal 5 itself. Here the seal 5 can be designed in such a way that a spring element is integrated into the seal 5 or the seal 5 can be appropriately supported on the valve body 7 or on the inlet adapter 10 and the same sealing function can be achieved as with a separate spring element but with a reduced number of parts, i.e. without a spring element and a spring-guiding element. In Fig. 7A the seal is shaped in such a way that a spring element is integrated in the form of springy ribs or protuberances into the seal 5.

With the embodiment in Fig. 7B, the seal 5 can be supported on the inlet adapter 10 or on the valve body 7. Here the seal 5 designed as a sealing lip is prestressed owing to the installation space and the seal 5 is designed in such a way that secure insertion of the sealing body 2 into the seal 5 is also possible without a spring force limited in its movement.

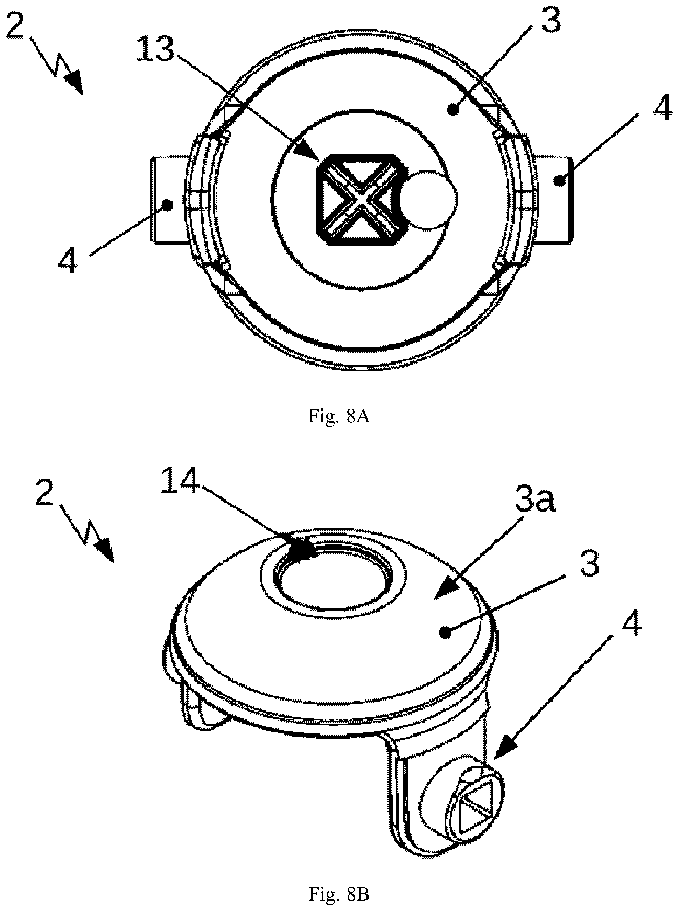

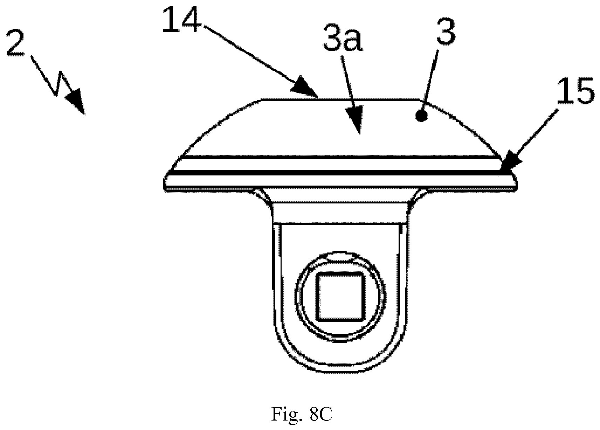

Figures 8A, 8B and 8C show several views of sealing bodies 2. Fig. 8A shows a plan view of the sealing body 2, with the interior of the sealing surface element 3 shown with gripping ribs 13 arranged on it. Fig. 8B shows a perspective view from diagonally above and Fig. 8C shows a side view.

The sealing body 2 has a sealing surface element 3 with a sealing surface 3a and laterally arranged bearing elements 4. The sealing body 2 is essentially constructed symmetrical to a plane which runs centrally between the two bearing elements 4. This symmetry permits a rapid and straightforward assembly of the valve 1.

In the interior of the sealing surface element 3, gripping ribs 13 are arranged in the shape of a cross. The gripping ribs 13 are positioned in the centre of the sealing surface element 3. Such gripping ribs 13 permit a simple, self-centring pick-up of the sealing body 2 with a gripper from an automated assembly unit. Advantageously, a section 14 of the sealing body 2 is arranged symmetrically in the centre of the ball segment-shaped sealing surface element 3. On the sealing surface element 3 a sealing surface sealing section 15 is arranged which tangentially turns into a curve. With the aid of this contour, the insertion of the sealing body 2 into the seal during the closing process becomes possible. The tangential transition is arranged at the end of the sealing surface element 3 which faces the bearing elements 4.

The symmetrically designed bearing elements 4 have an opening in which the bearing elements can accommodate a square. Thus the drive train can be directly connected to the sealing body 2.

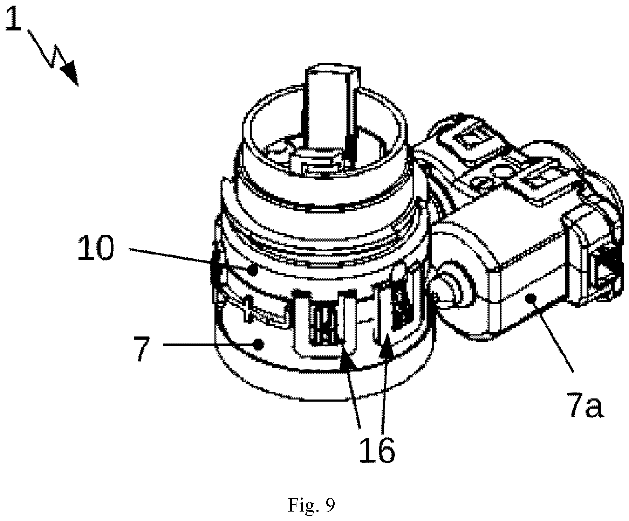

Fig. 9 shows a perspective view of a sealing system 1 from diagonally above. The valve body 7 and the housing of the motor control gear unit 7a form a unit, as a result of which the sealing between the two components is made considerably simpler. In order to ensure an automated assembly of the sealing system 1, the design envisages several snap connections 17 between the inlet adapter 10 and the valve body, through which these are connected to one another.

In at least one embodiment, the valve has an inlet adapter, a valve body attached to the inlet adapter and a seal arranged between the inlet adapter and the valve body. The seal has a seal opening through which the fluid flow flows when the valve is open. In addition, the valve has a motor control gear unit and a sealing body with a ball segment-shaped sealing surface element and bearing elements arranged at the side(s) of it. By means of the bearing elements, the sealing body is mounted so as to be rotatable within the valve body around an axis running perpendicular to the fluid flow path and through the bearing elements. The sealing body is constructed symmetrically in relation to a plane arranged centrally between the two bearing elements and positionable by means of a rotary movement in an open and a closed valve position. Here the sealing surface element is designed in such a way that the sealing surface element completely blocks the seal opening in the closed valve position and after rotation of the sealing body into the open valve position has no point of contact with the seal. The seal has an outer section for a static seal between the housing components and an inner section for dynamic sealing of the sealing body. In addition, the seal is prestressed in such a way that the inner section of the seal exerts a pressure on the sealing body in the closed valve position.

If the sealing body does not touch the seal, then the sealing body does not exert any pressure on the seal. In terms of the invention, the seal is also not touched by the sealing body if the distance between the sealing body and the seal is very small. Crucial here is the force not exerted by the sealing body on the seal, because as a result of this deformation of the seal and/or an uneven stress on the seal is avoided.

An advantage of a design of a valve in which the seal is arranged with the seal opening that is to be sealed off being between the inlet adapter and the valve body is that as a result, the number of seals can be advantageously reduced.

A ball segment-shaped element, which is also termed a valve shutter, has - in terms of the invention - the shape of a section of a spherical surface; here it is not imperative that this is a perfect spherical surface. Areas, in particular in the centre between the bearing elements arranged at the side(s), may be designed flattened or deformed in another manner. Rather, the important thing here is that it is only a section of a spherical surface and that it essentially follows the shape of a ball. Here the size of the one ball segment-shaped sealing surface element is preferably adapted to the size of the seal, with the surface area of the surface of the sealing surface element being larger than the surface of the seal opening and preferably smaller than twice the surface area of the seal opening.

An open valve position denotes, in terms of the invention, an arrangement of the individual components of a valve in which the gas flow can flow along a flow path through the valve. In contrast to this, the flow path of the gas through the valve is, in the closed valve position, blocked at one point. The components of the valve are therefore arranged in such a way that at least one of the components completely blocks the path of the gas through the valve. With this in mind, particularly the sealing body can be arranged in a closed valve position in which the sealing body blocks the flow-through of the gas through the valve. In addition, the sealing body is arranged in an open valve position if the gas can flow past the sealing body, in particular if the sealing body does not impede the flow of the gas, or only negligibly impedes it. The sealing body is, furthermore, arranged in a blocking position when the gas flow is prevented and a closed valve position exists. The sealing body is arranged in a 'pass-through' position if the gas can pass through the sealing body and the valve is open. Thus an open valve position exists.

The bearing elements arranged at the side(s) are arranged adjacent to the sealing surface element and can have different shapes. The bearing elements may for example have protuberances which reach into corresponding openings of the valve body. Alternatively the bearing elements themselves may have openings through which rods can be inserted.

An inlet adapter is, in terms of the invention, a component through which the gas flows before it reaches the valve body. In accordance with the invention the gas first flows through the inlet adapter, then the seal and subsequently the valve body. The inlet adapter and the valve body are sealed off against each other by the seal in a gas-tight manner if the sealing body is arranged in the closed valve position. Here the sealing body advantageously seals off the seal in the closed valve position in a gas-tight manner.

With the invention it is possible to increase the robustness of a valve and both the number of parts and the costs of the parts can be reduced. In particular, the envisaged design is suitable for automation.

Owing to the miniaturised components, in particular the sealing body, which is therefore capable of being operated with a lower expenditure of energy, the invention permits reliable valve function with reduced energy input with regard to the drive unit.

A seal opening in the seal corresponding to the sealing body is preferably designed round or oval.

In an advantageous version, the sealing surface element is at a distance from the seal with a positioning of the sealing body in the open valve position.

Preferably the sealing body encloses, between the open and the closed valve position of the sealing body, an angle which is larger than 90°. Here an axis passing through the sealing body which is perpendicular to the axis of rotation of the sealing body and designed stationary in relation to the sealing body encloses an angle which is larger than 90° between the situation in the open valve position and the situation in the closed valve position.

Preferably, the thickness of the sealing surface element is constant. A constant thickness of the sealing surface element simplifies the injection moulding process and reduces susceptibility to errors. In one version the thickness of the sealing surface is essentially constant, but the sealing body additionally has gripping ribs. These gripping ribs are raised points on the sealing surface element which preferably are small in size themselves and by means of which a gripper arm can grip the sealing body and vary its position. Particularly preferably, the gripping ribs are designed as internal gripping ribs inside the ball segment-shaped sealing surface element.

In an advantageous version, the central area of the sealing surface element is flattened. This central area is also particularly suitable for arranging gripping ribs on this central area of the sealing surface element. This makes it easier for the sealing body to be gripped by automated systems, with the sealing body capable of being grasped by a gripper on the gripping ribs.

The possible flattening on the sealing body, which is also termed a section, assists with the defined position of the sealing body within the valve, which provides advantages in terms of the conveyability and the measuring surfaces. The recess in the valve, which constitutes part of the bearing in the ejector side, helps to avoid potential deformation of parts and aids optimised release properties of the sealing body. An adequately sized feedthrough permits a specified volume flow.

In one possible embodiment the seal is designed as a sealing lip.

Preferably the bearing elements have openings for a connection to a drive wheel. In an advantageous version these are designed square or round or star-shaped. In accordance with a potential embodiment, the sealing surface element has a sealing surface which has a ring-shaped sealing surface seal section, which is designed capable of being placed on a ring-shaped seal.

Advantageously it is possible, in particular through the uniform wall thicknesses of the sealing body, to minimise the weight of the sealing body, which also leads to a cost reduction in manufacture.

Preferably the valve has two spring elements for prestressing the seal. The two spring elements are arranged within the inlet adapter. Particularly preferably the two spring elements are arranged in spring-guiding elements, which are designed as spring holder pockets. Here, preferably a symmetrical design in relation to a plane arranged centrally between the spring-guiding elements is selected, which results in automated assembly being very easy to perform. The symmetry plane may also run through one of or through several of the spring-guiding elements. It is also possible to design the valve with more than two spring elements and spring holder pockets.

When using several spring elements, it is possible to design these smaller without having to tolerate any losses in terms of the spring effect on the seal. Hence both spring holder pockets can be designed smaller than a single spring-guiding element. The higher flow cross section resulting from this advantageously reduces the pressure drop in the valve. Smaller spring elements are also easier to handle during automated assembly. Particularly recommended is a design of the valve in which the spring-guiding elements are arranged symmetrically in relation to a plane positioned within the valve. Preferably this plane lies centrally between the two bearing elements of the sealing body.

In accordance with an advantageous design of the valve, the valve body and the housing of the motor control gear unit are designed as one part. By this means, a static seal between the two components can, advantageously, be dispensed with.

Preferably the sealing body has latching elements with which it can be engaged with receiving elements of the valve body. In addition the spring holder pockets have, in one possible embodiment, latching elements with which the spring holder pockets can be engaged with receiving elements of the valve body. Components with such latching mechanisms can be assembled quickly and in an uncomplicated manner. In particular, automated assembly is possible. For this, it is particularly preferable to design the individual components in such a way as to enable assembly of the inlet adapter, the valve body, the seal and the sealing body from one direction. Only for the motor control gear unit is assembly from a second direction then necessary. In this way the valves can, advantageously, be put together quickly and cost-effectively.

One possible design of the valve has a spring element which is arranged with limited movement within the valve and by means of which the seal and the sealing surface element of the sealing body are pressed against one another. The spring element is therefore arranged in the valve in such a way that the extension of the spring element is limited on the one hand by a housing component of the valve, for example the spring-guiding element, and on the other by the seal or the sealing surface element. By this means, a spring force acts on the seal or the sealing surface element, as a result of which the seal and the sealing surface element are pressed together when the sealing body is positioned in a closed valve position. Thus the valve has, in one possible version, a spring element which is arranged on the seal and is limited in movement by the spring-guiding element. When the sealing body is positioned in a closed valve position, such a pressure is exerted by the spring element on the seal that the seal is pressed against the sealing surface element.

Alternatively, the spring element is integrated into the seal. Preferably the shape of the seal and the arrangement of the seal produce the desired spring effect within the valve and also the pressing force between the sealing surface element and the seal. The sealing lip must, for this purpose, be suitably prestressed in the installation space, preferably on the valve body, in order to obtain sufficient pressing force for sealing between the sealing body and the seal.

Alternatively the spring element may also be integrated in the sealing body.

Advantageously it is possible, through the invention, to simplify the assembly of the valve, whereby in a preferred version first the sealing body, then the seal and subsequently the spring element are mounted.

As per the design, the sealing body of the valve is executed in the form of a partial spherical surface. In the event of an open valve, the sealing body does not touch the seal, as a result of which there can be no one-sided material stress on the contact surfaces. The key part of the sealing body is consequently the surface which covers the seal opening in the seal and hence closes the valve. Essentially, therefore, the sealing body consists of this "valve closed" surface, i.e. of a surface for sealing or covering the seal opening, and elements for mounting the sealing body in the valve body.

The sealing body is essentially reduced to a sealing surface element whose surface or sealing surface blocks the seal opening and hence the flow path through the valve. As a result, the weight is advantageously minimised and the installation size reduced.

With such a design it is possible for the sealing body to completely leave the seal. By means of this, the uneven stress placed on the seal with positioning of the sealing body in the open valve position can be prevented.

The sealing body preferably has a fixed position of the axis of the bearing; consequently the sealing body is ideally positioned in the sealing surface and the tolerance chains are minimised.

Furthermore it is advantageous to incorporate the seal on the valve input side, because by this means the number of required seals is reduced.

In addition a spring element, for example one or more compression springs, presses the seal against the sealing body via a spring holder. Consequently no special spring characteristics are required from the seal. The seal seals off the housing components against each other, directly on the sealing body and on the reverse side. Preferably this takes place axially, radially or, as a combined sealing system, as a combination of axially and radially. As a result additional seals and parts can be dispensed with.

Preferably the spring force is limited in its movement in order to ensure secure insertion of the sealing body into the seal. Furthermore, in this way the stress placed on and the deformation of the seal is limited for the open valve position. This additionally provides a major advantage for the assembly of the springs. Furthermore this limitation of movement can be set in such a way that the maximum deformation is limited due to the spring force of the seal designed as a sealing lip, as a result of which the insertion of the sealing body into the seal can be optimised.

In order to reduce the installation size of the sealing body further, the radius of the sealing surface is minimised. Thus the required torque is also reduced. As a result, the drive unit's energy input can be reduced. The sealing body has a sealing surface element consisting of a sealing surface and a tangential transition into an inflow surface and thus ensures secure insertion into the final seal seat. In addition, the sealing body is preferably constructed symmetrically. It has two identical bearings and therefore the component does not have to be in the correct position when supplied. Such a design is also suitable for automation.

The section of the sealing body should be symmetrical in the centre of the ball segment, i.e. in the centre of the ball segment-shaped sealing surface element, in order to achieve an ideal roundness and as few 'gutters' and swirls as possible on the sealing surface during injection moulding. Advantageously, the cycle time during injection moulding can be reduced by means of a component in accordance with the invention, since constant wall thicknesses permit uniform cooling during injection moulding. In addition, the quality of the surface can be improved. Furthermore, the spherical sealing surface element is offset in order to provide a suitable platform for the part for assembly purposes. In this way the sealing body can be easily supplied and measured.

In one possible version, direct connection of the sealing body to the drive train takes place. The drive wheel of the gearing mechanism is sealed off by means of the lip seal and engages directly with the sealing body, preferably by means of a square or a star.

The above embodiments are merely to illustrate the technical solutions of the present invention and are not intended to limit the present invention. Although the present invention has been described with reference to the above preferred embodiments, it should be appreciated by those skilled in the art that various modifications and variations may be made without departing from the spirit and scope of the present invention.

## Claims

1. A valve (1) for interruption of a fluid flow along a fluid flow path passing through the valve (1), the valve comprising:
an inlet adapter (10),
a valve body (7) connected to the inlet adapter (10),
a seal (5) arranged between the inlet adapter (10) and the valve body (7) with a seal opening (6) through the seal for the fluid flowing when the valve (1) is open,
a motor control gear unit (7a); and
a sealing body (2) with a ball segment-shaped sealing surface element (3) and bearing element (4) arranged on the side of the sealing surface element (3), wherein the sealing body (2) is mounted within the valve body (7) so as to be rotatable around an axis running substantially perpendicular to the fluid flow path and through the bearing element (4);
wherein the seal (5) comprises an outer section for static sealing between the components in the valve and an inner section for dynamic sealing relative to the sealing body (2), and the seal (5) is prestressed in such a way that the inner section of the seal (5) exerts a pressure on the sealing body (2) in the closed valve position.

2. The valve of claim 1, wherein the prestressing of the seal (5) is achieved through at least two spring elements (8) which are arranged within the inlet adapter (10).

3. The valve of claim 2, wherein the valve (1) comprises several spring-guiding elements (9) in the form of spring holder pockets, in which the spring elements (8) are arranged.

4. The valve of claim 1, wherein a single spring element (8) presses the seal (5) onto the sealing body (2) when the valve (1) is closed.

5. The valve of claim 4, wherein the spring element (8) is arranged around a spring-guiding element (9) positioned within the inlet adapter (10).

6. The valve of claim 1, wherein the a spring effect is produced by a shape of the seal (5) and/or an arrangement of the seal (5) within the valve (1).

7. The valve of any one of claims 1-6, wherein gripping ribs (13) are arranged in a central area of the sealing surface element (3) to make it easier to grip the sealing body (2).

8. The valve of any one of claims 1-7, wherein a central area of the sealing surface element (3) is flat.

9. The valve of any one of claims 1-8, wherein the motor control gear unit (7a) comprises a drive wheel (12), the bearing elements (4) comprise openings for a connection to the drive wheel (12), the valve body (7) and a housing of the motor control gear unit (7a) are designed as one piece.

10. The valve of any one of claims 1-9, wherein the sealing surface element (3) comprises a ring-shaped sealing surface seal section (15) which is designed capable of being applied to a ring-shaped seal (5).

11. The valve of any one of claims 1-10, wherein the sealing body (2) encloses an angle which is greater than 90° between the open and the closed valve position of the sealing body (2).

12. The valve of any one of claims 1-11, wherein the seal opening (6) is designed circular or oval, a surface area of the surface of the sealing surface element (3) is larger than the surface of the seal opening (6) and smaller than twice the surface area of the seal opening (6).

13. The valve of any one of claims 1-12, wherein the seal (5) is designed as a sealing lip.

14. The valve of any one of claims 1-13, wherein a sealing surface (3a) is arranged on the sealing surface element (3) in a direction corresponding to the seal (5).

15. The valve of any one of claims 1-14, wherein a thickness of the sealing surface element (3) is constant, a number of the bearing element (4) is two and the sealing body (2) is substantially constructed symmetrically in relation to a plane arranged centrally between the two bearing elements (4).
